# FASCICULE DE BREVET EUROPEEN

(11) **EP 3 518 662 B1**
(45) Date de publication et mention de la délivrance du brevet: **17.09.2025**
(21) Numéro de dépôt: 17792114.5
(22) Date de dépôt: 02.10.2017
(51) Int. Cl.: A01K 1/00, A01K 1/015, A01K 7/02

(54) **SYSTÈME POUR LE CONFORT THERMIQUE DES ANIMAUX DANS UNE ENCEINTE D'ÉLEVAGE**
SYSTEM FÜR DEN WÄRMEKOMFORT VON TIEREN IN EINEM GEHEGE
SYSTEM FOR THE THERMAL COMFORT OF ANIMALS IN A FARM ENCLOSURE

(30) Priorité: 03.10.2016 FR 1659521
(43) Date de publication de la demande: 07.08.2019
(73) Titulaire: Bioret Agri-Logette Confort, 44390 Nort sur Erdre (FR)
(72) Inventeur: BIORET, Jean-Vincent, 44390 Petit Mars (FR)
(74) Mandataire: Jacobacci Coralis Harle
(86) Numéro de dépôt international: PCT/FR2017/052704
(87) Numéro de publication internationale: WO 2018/065716

(56) Documents cités:
- US-A1- 2011 283 952
- US-A1- 2014 374 056

## Description

### DOMAINE TECHNIQUE AUQUEL SE RAPPORTE L'INVENTION

La présente invention concerne un système pour le confort thermique des animaux, par exemple pour les bovins laitiers et les bovins à viande.

Elle concerne en particulier un système de confort thermique comprenant des matelas de confort pour l'aménagement de logettes dans une enceinte d'élevage.

### ARRIERE-PLAN TECHNOLOGIQUE

Le confort des animaux constitue un paramètre déterminant dans le rendement d'un élevage.

Ce confort influence notamment la santé, la façon de s'alimenter, la prise alimentaire, la fertilité et la longévité des animaux.

Ce confort des animaux comprend notamment une composante « thermique ».

En effet, en cas d'une forte chaleur ou d'un froid intense, les animaux sont susceptibles de subir un phénomène néfaste dit « de stress thermique ».

Un tel stress thermique se traduit généralement par des manifestations comportementales de défense, une chute des performances zootechniques, une détérioration des paramètres de la reproduction et une augmentation des pathologies.

Pour prévenir ce phénomène, il est important d'assurer une régulation de la température ambiante dans l'enceinte d'élevage, en fonction des conditions thermiques environnantes.

Encore pour prévenir le phénomène de stress thermique, il peut également être efficace de réguler la température de l'eau d'abreuvement.

En effet, une température inadaptée de l'eau d'abreuvement est susceptible d'entraîner un phénomène de sous-abreuvement avec comme conséquences une déshydratation, des risques de chute de la consommation alimentaire, une baisse de la production et une intolérance à la chaleur.

Il est en particulier nécessaire d'éviter une eau d'abreuvement qui serait trop froide, susceptible d'entraîner des troubles digestifs, en plus d'une sous-consommation.

Dans ce contexte, il existe un besoin d'un système pour enceinte d'élevage qui est adapté à favoriser le confort thermique des animaux notamment lorsqu'ils se reposent au sein de leurs logettes ou lorsqu'ils s'abreuvent.

De tels systèmes sont par exemple décrits dans les documents US-2011/283952 et US-2014/374056.

US-2011/283952 divulgue un système pour le confort thermique des animaux dans une enceinte d'élevage, comprenant plusieurs cavités étanches destinées à contenir un fluide caloporteur, sous-jacentes d'une zone d'accueil et comportant chacune au moins deux orifices débouchants, un circuit fluidique caloporteur contenant ledit fluide caloporteur et raccordé aux orifices débouchants et comportant des moyens pour générer une circulation dudit fluide caloporteur, un circuit fluidique d'abreuvement, destiné à contenir de l'eau d'abreuvement et des moyens échangeurs thermiques implantés entre lesdits circuits fluidiques.

### OBJET DE L'INVENTION

Dans ce contexte, la demanderesse a développé un système pour le confort thermique des animaux dans une enceinte d'élevage, par exemple pour bovins laitiers ou pour bovins à viande, comprenant :
(a) au moins un matelas de confort qui comprend au moins une couche élastomère et qui comporte deux faces opposées :
   - une face supérieure, apte à subir une déformation élastique et comportant au moins une zone d'accueil sur laquelle un animal est destiné à prendre appui, et
   - une face inférieure, destinée à reposer sur une surface de réception,

   laquelle au moins une couche élastomère comporte plusieurs cavités étanches destinées à contenir un fluide caloporteur,
   lesquelles cavités étanches sont sous-jacentes d'au moins une partie de ladite au moins une zone d'accueil et comportent chacune au moins deux orifices débouchants,
(b) un circuit fluidique caloporteur, destiné à contenir ledit fluide caloporteur, lequel circuit fluidique caloporteur est raccordé aux orifices débouchants desdites cavités étanches et comporte des moyens pour générer une circulation dudit fluide caloporteur au sein de chacune desdites cavités étanches, entre leurs orifices débouchants respectifs,
(c) un circuit fluidique d'abreuvement, distinct dudit circuit fluidique caloporteur, destiné à contenir de l'eau d'abreuvement et à alimenter au moins un abreuvoir, et
(d) des moyens échangeurs thermiques qui sont implantés entre ledit circuit fluidique caloporteur et ledit circuit fluidique d'abreuvement, pour assurer des échanges thermiques entre ledit fluide caloporteur et ladite eau d'abreuvement.

Ladite au moins une couche élastomère comporte au moins une chambre étanche, destinée à contenir un fluide amortisseur et ménagée entre lesdites cavités étanches et ladite face supérieure dudit matelas, laquelle au moins une couche élastomère comporte au moins un orifice débouchant pour l'accès à ladite au moins une chambre étanche.

Des échanges thermiques vont se produire au sein des moyens échangeurs thermiques entre, d'une part, le fluide caloporteur provenant du circuit fluidique caloporteur et, d'autre part, l'eau d'abreuvement provenant du circuit fluidique d'abreuvement.

Un tel système a ainsi pour intérêt de permettre un contrôle, d'une part, de la température du matelas de confort avec lequel l'animal est directement en contact et, d'autre part, de la température de l'eau d'abreuvement.

Ces températures sont alors ajustées en fonction des conditions thermiques environnantes.

En effet, de manière générale, l'eau d'abreuvement présente une température nominale comprise entre 10°C et 15°C, tout au long de l'année
En été, l'eau d'abreuvement circulant au travers de l'échangeur thermique permet de réduire la température du fluide caloporteur.

Les matelas de confort sont ainsi refroidis en surface par le fluide caloporteur refroidi, de sorte à rafraichir l'animal en présence et ainsi à limiter l'augmentation de la température corporelle de ce dernier.

De plus, toujours en été, les animaux boivent une quantité accrue d'eau d'abreuvement. L'augmentation de l'abreuvement conduit à une augmentation de la circulation de l'eau d'abreuvement dans les moyens échangeurs thermiques, avec pour résultat d'optimiser le refroidissement du fluide caloporteur, ce qui est particulièrement intéressant lors des pics de stress thermique des animaux (plus il fait chaud, plus les animaux boivent, plus l'eau d'abreuvement circule dans les moyens échangeurs thermiques, plus le fluide caloporteur est refroidi, plus le matelas est refroidi).

Parallèlement, l'eau d'abreuvement sortant des moyens échangeurs thermiques est réchauffée, ce qui favorise sa consommation par les animaux de l'élevage.

De manière alternative ou complémentaire, en cas de froid, le matelas de confort peut être chauffé de sorte à réchauffer l'animal présent.

Le fluide caloporteur réchauffe alors l'eau d'abreuvement au sein des moyens échangeurs thermiques. Là encore, la température de l'eau d'abreuvement sera plus adaptée pour les animaux.

La solution technique selon l'invention a ainsi l'avantage d'améliorer la température des deux fluides précités, répondant alors efficacement aux besoins physiologiques des animaux de l'élevage, cela avec un coût de revient réduit et avec une consommation d'énergie minimale.

Selon un mode de réalisation particulier, les moyens échangeurs thermiques comprennent un corps creux définissant une chambre contenant deux circuits fluidiques internes distincts :
- un premier circuit fluidique interne, comportant une tubulure implantée dans ladite chambre et munie de deux orifices débouchant hors dudit corps creux pour son raccordement à un premier circuit fluidique choisi parmi le circuit fluidique caloporteur ou le circuit fluidique d'abreuvement, et
- un second circuit fluidique interne, formé par ladite chambre qui est munie deux conduits munis chacun d'un orifice débouchant hors dudit corps creux pour le raccordement à un second circuit fluidique choisi parmi le circuit fluidique caloporteur ou le circuit fluidique d'abreuvement, et d'un orifice débouchant dans ladite chambre pour permettre une circulation fluidique dans ladite chambre entre lesdits conduits.

Dans ce cas, de préférence, le premier circuit fluidique interne des moyens échangeurs thermiques est raccordé au circuit fluidique caloporteur, et le second circuit fluidique interne des moyens échangeurs thermiques est raccordé au circuit fluidique d'abreuvement.

D'autres caractéristiques non limitatives et avantageuses du système conforme à l'invention, prises individuellement ou selon toutes les combinaisons techniquement possibles, sont les suivantes :
- les cavités étanches dudit au moins un matelas de confort s'étendent parallèlement, ou au moins approximativement parallèlement, les unes par rapport aux autres, et en ce que lesdites cavités étanches ont chacune une forme allongée rectiligne ; de préférence, ladite au moins une couche élastomère comporte deux bords longitudinaux, et lesdites cavités étanches s'étendent parallèlement, ou au moins approximativement parallèlement, auxdits bords longitudinaux ;
- chaque zone d'accueil comporte l'une de ces chambres étanches, qui lui est propre, ladite couche élastomère comportant ainsi une succession de chambres étanches juxtaposées, qui correspondent chacune à l'une des zones d'accueil ;
- le circuit fluidique caloporteur comprend encore des moyens pour réguler la température dudit fluide caloporteur, et lesdits moyens échangeurs thermiques sont implantés entre ledit au moins un matelas de confort et lesdits moyens de régulation de température ; de préférence, les moyens de régulation thermique sont choisis parmi des moyens aptes à chauffer et/ou refroidir ledit fluide caloporteur ;
- ladite au moins une couche élastomère est réalisée monobloc, laquelle couche élastomère définit directement lesdites cavités étanches et ladite au moins une chambre étanche.

La présente invention concerne également l'enceinte d'élevage équipée d'un système pour le confort thermique selon l'invention.

De préférence, l'enceinte d'élevage comprend des logettes et au moins un bac d'abreuvement. Ledit au moins un matelas de confort recouvre le sol de l'une au moins desdites logettes ; ledit au moins un matelas de confort comporte une pluralité de cavités étanches qui s'étendent au sein de l'une au moins desdites logettes ; et le circuit fluidique d'abreuvement est raccordé audit au moins un bac d'abreuvement.

L'invention concerne encore un procédé pour améliorer le confort thermique des animaux dans une enceinte d'élevage selon l'invention.

Ce procédé comprend une opération de régulation de la température de la face supérieure dudit au moins un matelas de confort par :
- une circulation du fluide caloporteur dans lesdites cavités étanches dudit au moins un matelas de confort, et
- éventuellement une régulation de la température dudit fluide caloporteur.

Ce procédé comprend également une opération de régulation de la température de l'eau d'abreuvement et/ou du fluide caloporteur, par une circulation de ladite eau d'abreuvement et dudit fluide caloporteur au sein des moyens échangeurs thermiques.

### DESCRIPTION DETAILLEE D'UN EXEMPLE DE REALISATION

L'invention sera encore illustrée, sans être aucunement limitée, par la description suivante de modes de réalisation particuliers en relation avec les figures annexées dans lesquelles :
- la figure 1 est une représentation schématique du système de confort thermique selon l'invention, équipant une enceinte pour l'élevage d'animaux,
- la figure 2 est une vue schématique et en perspective d'une série de logettes qui est équipée d'un matelas de confort, ne faisant pas partie de la présente invention, consistant en une couche de confort réalisée en un matériau élastomère ;
- la figure 3 est une vue partielle et agrandie de la figure 2, montrant l'un des bords transversaux de la couche élastomère dont les cavités étanches sont raccordées notamment au circuit fluidique caloporteur ;
- la figure 4 est encore une vue en perspective de l'un des bords transversaux de la couche élastomère, pratiquement vue sur chant, avec le circuit fluidique caloporteur qui est masqué ;
- la figure 5 correspond à la figure 2, vue de dessus ;
- la figure 6 est une vue schématique, et de côté, des différentes pièces destinées à être assemblées pour constituer la couche élastomère du matelas de confort selon les figures 2 à 5 ;
- la figure 7 est une vue schématique et en perspective d'un matelas de confort constitutif du système de confort selon l'invention, dans laquelle ledit matelas de confort est constitué ici par la couche élastomère qui comporte des chambres étanches juxtaposées longitudinalement et sus-jacentes des cavités étanches ;
- la figure 8 est une vue partielle et agrandie de la figure 7, montrant l'un des bords transversaux de la couche élastomère ;
- la figure 9 est une vue en coupe de la couche élastomère selon les figures 7 et 8, selon un plan de coupe parallèle à ses bords transversaux ;
- la figure 10 est une vue schématique, et de côté, des différentes pièces destinées à être assemblées pour constituer la couche élastomère du matelas de confort selon les figures 7 à 9.

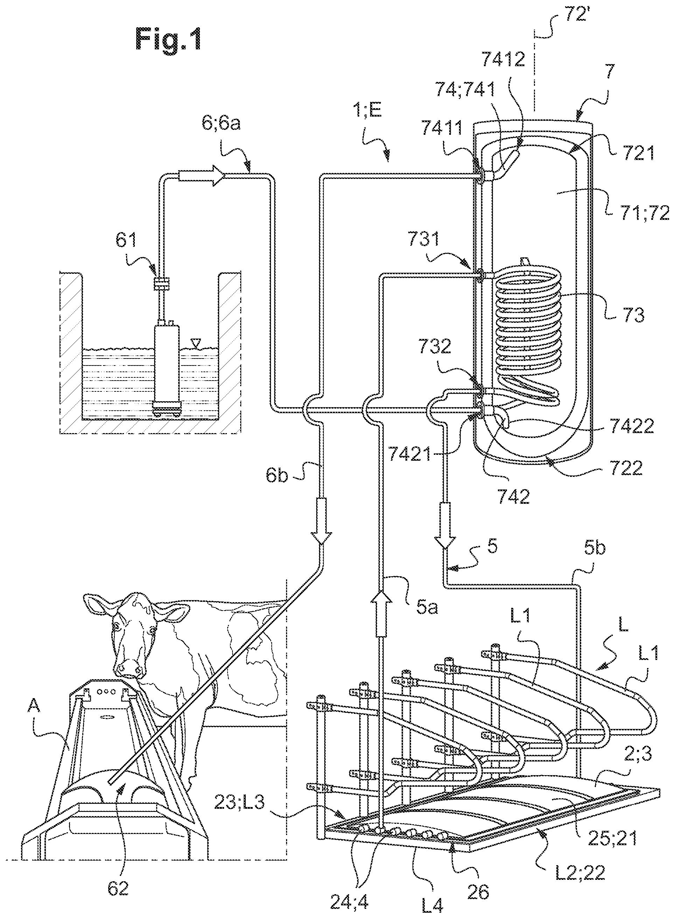

Tel que représenté schématiquement sur la figure 1, le système de confort 1 selon l'invention est destiné à équiper une enceinte d'élevage E dans laquelle sont ménagées des stalles de couchage.

### Enceinte d'élevage et logettes

L'enceinte d'élevage E consiste avantageusement en une étable pour l'élevage de bovins, en particulier de bovins laitiers ou de bovins à viande.

Les stalles de couchage consistent ici en des logettes L ménagées sur au moins une ligne.

Les logettes L constituent un compromis entre un couchage confortable pour le bovin, le respect du mouvement levé/couché, une station debout confortable et un minimum de souillures dans la logette.

Chaque logette L, de manière classique, est délimitée par :
- deux séparations latérales L1, par exemple des structures tubulaires,
- un seuil arrière de logette L2, s'étendant le long d'un couloir d'accès,
- une limite avant L3, comprenant avantageusement une barre haute au garrot et un arrêtoir inférieur (ou limiteur d'avancement), formant le fond de la logette L, et
- un sol L4, par exemple, une dalle de béton.

L'enceinte d'élevage E comporte encore au moins un abreuvoir A, pour l'alimentation des animaux en eau d'abreuvement.

### Système de confort

Pour assurer le confort thermique des animaux, le système 1 selon l'invention comprend les éléments suivants :
- au moins un matelas de confort 2, recouvrant le sol L4 de chacune des logettes L et comportant au moins une couche élastomère 3 comportant plusieurs cavités étanches 4 destinées à contenir un fluide caloporteur (non représenté),
- un circuit fluidique caloporteur 5, destiné à contenir le fluide caloporteur et à alimenter les cavités étanches 4 dudit au moins un matelas de confort 2,
- un circuit fluidique d'abreuvement 6, destiné à contenir de l'eau d'abreuvement et à alimenter l'abreuvoir A, et
- des moyens échangeurs thermiques 7 qui sont implantés entre le circuit fluidique caloporteur 5 et le circuit fluidique d'abreuvement 6, pour assurer les échanges thermiques entre le fluide caloporteur et l'eau d'abreuvement.

### Circuit fluidique caloporteur

Le circuit fluidique caloporteur 5 comporte un ensemble de conduits ou de canalisations, destinées à contenir le fluide caloporteur.

Le fluide caloporteur est avantageusement choisi parmi les liquides, par exemple l'eau ou un mélange eau/glycol.

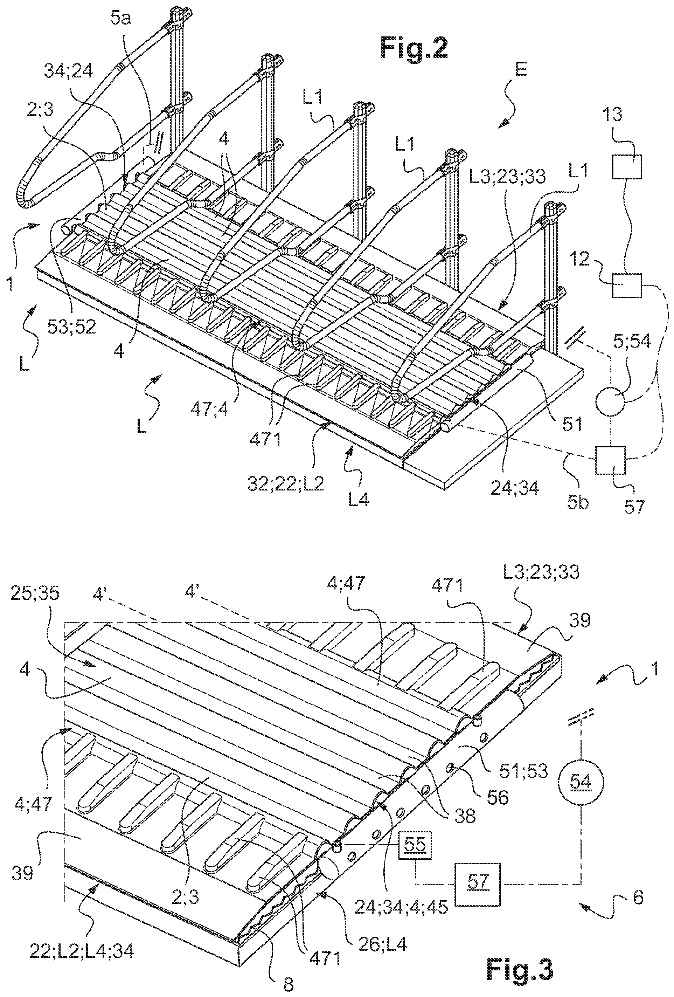

Le circuit fluidique caloporteur 5 consiste ici en un circuit fermé comportant deux parties séparées par les moyens échangeurs thermiques 7 (figures 1 et 2) :
- une partie amont 5a, s'étendant depuis un matelas de confort 2 jusqu'aux moyens échangeurs thermiques 7, et
- une partie aval 5b, s'étendant depuis les moyens échangeurs thermiques 7 jusqu'au matelas de confort 2.

Le circuit fluidique caloporteur 5 comporte des moyens pour générer la circulation de ce fluide caloporteur, ici en boucle, dits encore « moyens de circulation » (les figures 2 et 3 montrent une mise en œuvre pour un premier mode de réalisation, ne faisant pas partie de la présente invention ; des branchements identiques sont réalisés pour la mise en œuvre des autres modes de réalisation).

En particulier, le circuit fluidique caloporteur 5 assure une répartition et une circulation parallèle du fluide caloporteur, le long des cavités étanches 4.

Tel que représenté sur la figure 2, le circuit fluidique caloporteur 5 comprend pour cela :
- des moyens de raccordement fluidique amont 51, pour une alimentation en fluide, qui sont connectés en parallèle aux orifices débouchants des cavités étanches 4 situés au niveau d'un premier bord transversal de la couche élastomère 3, et
- des moyens de raccordement fluidique aval 52, pour une collecte du fluide en sortie, qui sont connectés en parallèle aux orifices débouchants des cavités étanches 4 situés au niveau d'un second bord transversal de la couche élastomère 3.

Les moyens de raccordement fluidique amont 51 / aval 52 comportent chacun par exemple un dispositif de type clarinette 53, afin d'assurer la circulation parallèle du fluide caloporteur au sein de chacune des cavités étanches 4.

La connexion d'une clarinette 53 avec les orifices débouchants attenants s'effectue avantageusement par le biais de moyens mécaniques d'étanchéité.

Ces moyens de raccordement fluidique amont 51 / aval 52 peuvent être raccordés fluidiquement, pour la recirculation ou le recyclage de ce fluide caloporteur.

Le circuit fluidique caloporteur 5 comprend encore une pompe 54, pour provoquer le cheminement du fluide caloporteur.

Les moyens de raccordement fluidique amont 51 sont avantageusement équipés encore de moyens régulateurs de pression 55 et/ou de moyens régulateurs de débit 56.

Ainsi, la pression au sein des cavités étanches 4 est avantageusement réglée entre 0,3 et 3 bar, de préférence entre 1 et 1,5 bar.

Les moyens de raccordement fluidique amont 51 sont en plus avantageusement équipés des moyens 56 pour réguler le débit au sein de chacune des cavités étanches 4.

La pompe 54, les moyens régulateurs de pression 55 et/ou les moyens régulateurs de débit 56, sont avantageusement implantés sur la partie aval 5b du circuit fluidique caloporteur 5 (située entre les moyens échangeurs thermiques 7 et le matelas de confort 2).

En plus des moyens échangeurs thermiques 7 décrits ci-après, le circuit fluidique caloporteur 5 peut encore être équipé de moyens 57 pour réguler la température du fluide caloporteur (dits encore « moyens de régulation 57 »), avantageusement au niveau des moyens de raccordement fluidique amont 51.

Les moyens de régulation de température 57 sont avantageusement implantés sur la partie aval 5b du circuit fluidique caloporteur 5, entre les moyens échangeurs thermiques 7 et le matelas de confort 2.

Ces moyens de régulation 57 sont choisis parmi des moyens aptes à chauffer et/ou à refroidir le fluide caloporteur.

Par exemple, ces moyens de régulation 57 consistent en une pompe à chaleur, réversible avec mesure de la température.

Les moyens de régulation 57 comprennent avantageusement:
- des moyens pour mesurer la température de ce fluide caloporteur, par exemple une sonde de température, et
- éventuellement des moyens pour afficher la température mesurée.

Ces moyens de régulation 57 sont optionnels, notamment dans le cas où le fluide caloporteur présente initialement la température recherchée (par exemple une source d'eau fraiche pour le refroidissement du matelas de confort 2).

### Circuit fluidique d'abreuvement

Le circuit fluidique d'abreuvement 6 comporte un ensemble de conduits ou de canalisations destinées à contenir l'eau d'abreuvement.

Le circuit fluidique d'abreuvement 6 est un circuit ouvert, comportant deux extrémités terminales (figure 1) :
- une entrée 61, amont, raccordée à une source d'eau d'abreuvement, par exemple un réseau d'eau, un forage, etc., et
- une sortie 62, aval, destinée à alimenter au moins un abreuvoir A.

Ce circuit fluidique d'abreuvement 6 est divisé en deux parties :
- une partie amont 6a, s'étendant depuis l'entrée 61 jusqu'aux moyens échangeurs thermiques 7, et
- une partie aval 6b, s'étendant depuis les moyens échangeurs thermiques 7 jusqu'au moins un abreuvoir A.

La circulation de l'eau d'abreuvement dans ce circuit fluidique d'abreuvement 6 peut être assurée par la pression générée par la source d'eau d'abreuvement, voire par une pompe de circulation.

L'eau d'abreuvement présente, à l'origine, une température avantageusement comprise entre 10°C et 15°C.

L'eau d'abreuvement libérée dans ledit au moins un abreuvoir A présente quant à elle une température avantageusement comprise entre 17°C et 23°C.

### Moyens échangeurs thermiques

Les moyens échangeurs thermiques 7 sont implantés entre le circuit fluidique caloporteur 5 et le circuit fluidique d'abreuvement 6, distincts l'un de l'autre, pour assurer des échanges thermiques entre le fluide caloporteur et l'eau d'abreuvement.

Les moyens échangeurs thermiques 7 peuvent être choisis parmi les échangeurs thermiques 7 habituels (échangeurs tubulaires, à plaques, etc.) qui comportent deux circuits fluidiques dans lesquels sont destinés à cheminer les deux fluides pour obtenir un échange thermique entre ceux derniers.

En l'espèce, les moyens échangeurs thermiques 7 comprennent un corps creux 71 définissant une chambre 72 contenant deux circuits fluidiques internes 73, 74 dans lesquels sont destinés à cheminer l'un des deux fluides.

Le corps creux 71, et sa chambre 72, présentent par exemple une forme générale cylindrique.

La chambre 72 comporte en particulier un axe longitudinal 72', vertical, et deux extrémités opposées : une extrémité supérieure 721 et une extrémité inférieure 722.

Un premier circuit fluidique interne 73 se présente sous la forme d'une tubulure, ayant par exemple une forme spiralée, qui est implantée dans la chambre 72.

Cette tubulure est réalisée dans un matériau conducteur thermique, pour autoriser les échanges thermiques entre le fluide présent dans ladite tubulure et le fluide remplissant la chambre 72.

Ce premier circuit fluidique interne 73 est muni de deux orifices 731, 732, opposés et superposés, qui débouchent hors du corps creux 71 : un orifice supérieur 731 et un orifice inférieur 732.

Ce premier circuit fluidique interne 73 est ici raccordé au circuit fluidique caloporteur 5.

De préférence, ce circuit fluidique caloporteur 5 est raccordé au premier circuit fluidique interne 73 de sorte que :
- la partie amont 5a est connectée avec l'orifice supérieur 731, et
- la partie aval 5b est connectée avec l'orifice inférieur 732.

En d'autres termes, le circuit fluidique caloporteur 5 est raccordé au premier circuit fluidique interne 73 de sorte que le fluide caloporteur rentre par l'orifice supérieur 731 et ressorte par l'orifice inférieur 732.

Un second circuit fluidique interne 74 est formé par la chambre 72 qui est munie de deux conduits : un conduit supérieur 741 et un conduit inférieur 742.

Ces conduits 741, 742 sont disposés chacun au niveau de l'une des deux extrémités 721, 722 de la chambre 72.

Par exemple, le premier conduit 741, supérieur, est ménagé au niveau de l'extrémité supérieure 721 de la chambre 72 ; et le second conduit 742, inférieur, est ménagé au niveau de l'extrémité inférieure 722 de la chambre 72.

Chacun de ces deux conduits 741, 742 comportent deux orifices :
- un premier orifice 7411, 7421, externe, débouchant hors du corps creux 71 pour le raccordement au circuit fluidique d'abreuvement 6, et
- un second orifice 7412, 7422, intérieur, débouchant dans la chambre 72 pour permettre une circulation fluidique dans cette chambre 72 entre les conduits 741, 742.

En l'espèce, le second circuit fluidique interne 74 est ici raccordé au circuit fluidique d'abreuvement 6. L'eau d'abreuvement est ainsi destinée à remplir la chambre 72, et à noyer le premier circuit fluidique interne 73.

De préférence, le circuit fluidique d'abreuvement 6 est raccordé au second circuit fluidique interne 74 de sorte que la partie amont 6a est connectée avec le conduit inférieur 742 et la partie aval 6b est connectée avec le conduit supérieur 741.

En d'autres termes, le circuit fluidique d'abreuvement 6 est raccordé au second circuit fluidique interne 74 de sorte que le fluide d'abreuvement (froid) rentre par le conduit inférieur 742 et ressorte par le conduit supérieur 741 (réchauffé).

### Moyens de commande

Le système de confort 1 comporte encore avantageusement des moyens de commande 12 pour piloter le fonctionnement du circuit fluidique caloporteur 5 (figure 2).

Ces moyens de commande 12 sont choisis par exemple parmi :
- des moyens de commande manuelle,
- des moyens de commande du type programmateur (pour un fonctionnement selon des cycles prédéfinis), et
- des moyens de commande automatique, avantageusement notamment un programme d'ordinateur exécuté par un ordinateur.

Ces moyens de commande 12 sont alors avantageusement raccordés également avec des moyens 13 pour la mesure de la température au sein de l'enceinte d'élevage E.

### Matelas de confort

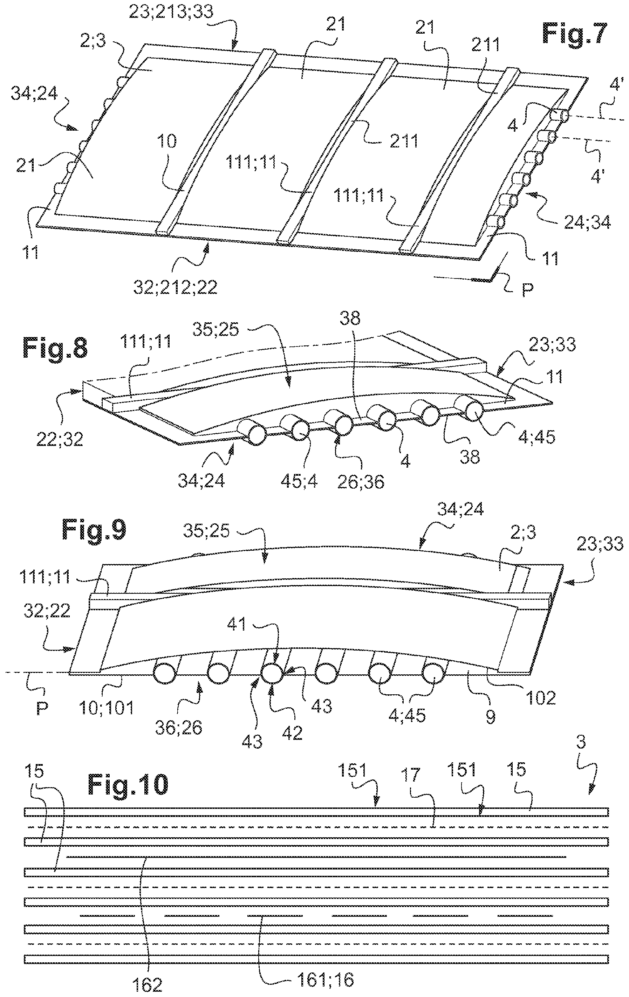

Le système de confort 1 comprend ici un matelas de confort 2 continu qui recouvre le sol L4 des logettes L alignées. Ce matelas de confort 2 comporte ainsi plusieurs zones d'accueil 21 qui sont juxtaposées sur la longueur dudit matelas de confort 2 (figure 7).

De manière alternative, non représentée, chaque logette L peut contenir son propre matelas de confort 2 qui définit alors une zone d'accueil 21 unique.

Le matelas de confort 2 a une forme générale rectangulaire qui est délimitée par deux couples de bords, à savoir :
- deux bords longitudinaux, à savoir un bord longitudinal arrière 22 destiné à s'étendre le long du seuil arrière L2 des logettes L équipées, et un bord longitudinal avant 23 destiné à s'étendre le long de la limite avant L3 de la ligne de logettes L, et
- deux bords transversaux 24, destinés à se situer au niveau des séparations latérales L1 des deux logettes L en bout de ligne.

Le matelas de confort 2 comporte encore deux faces opposées :
- une face supérieure 25, apte à subir une déformation élastique et formant les zones d'accueil 21 sur lesquelles les animaux sont destinés à prendre appui, et
- une face inférieure 26, destinée à reposer sur le sol L4 des logettes L.

Chacune des zones d'accueil 21 du matelas de confort 2 est destinée à accueillir ici un animal.

Chaque zone d'accueil 21 correspond ainsi à la surface au sol L4 d'une logette L, et est délimitée latéralement par deux séparations latérales L1.

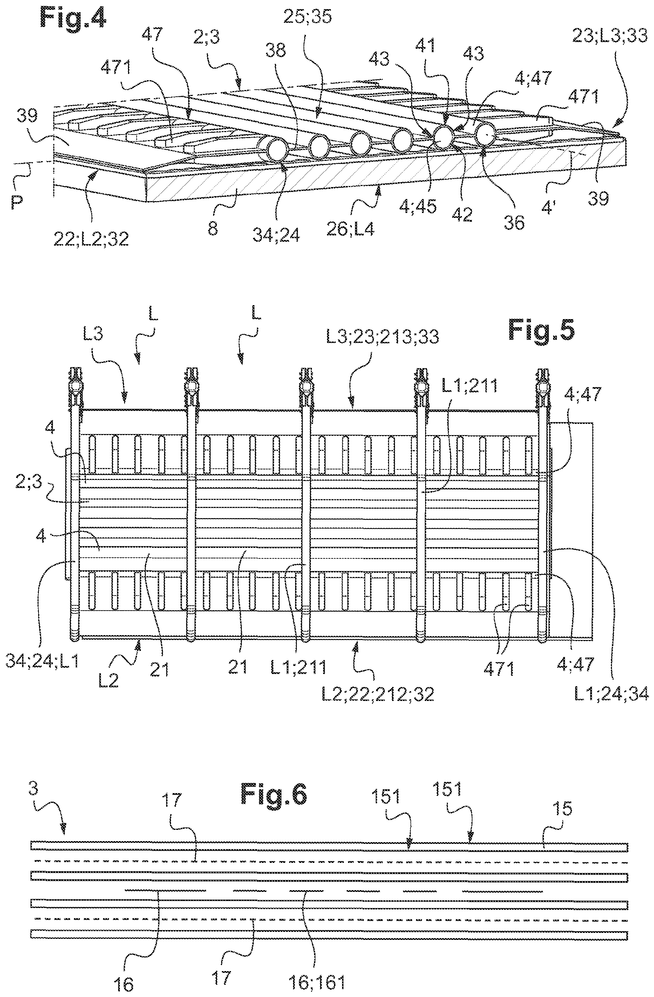

Chacune des zones d'accueil 21 a alors une forme générale rectangulaire qui est délimitée par différentes bordures (figures 5 et 7) :
- deux bordures latérales 211, situées chacune à l'aplomb d'une séparation latérale L1 de logette L,
- une bordure arrière 212, attenante au seuil arrière L2 de la logette L (formant une partie du bord longitudinal arrière 22 du matelas de confort 2), et
- une bordure avant 213, attenante à la limite avant L3 de la logette L (formant une partie du bord longitudinal avant 23 du matelas de confort 2).

### Couche élastomère du matelas de confort

Selon l'invention, la couche élastomère 3 forme intégralement le matelas de confort 2 (figures 7 à 10).

Dans tous les cas, cette couche élastomère 3 comporte également une forme générale rectangulaire qui est délimitée par deux couples de bords :
- deux bords longitudinaux, l'un arrière 32 et l'autre avant 33, ménagés respectivement au niveau des bords longitudinaux arrière 22 et avant 23 du matelas de confort 2, et
- deux bords transversaux 34, ménagés respectivement au niveau des bords transversaux 24 du matelas de confort 2.

La couche élastomère 3 comporte encore deux faces opposées :
- une face supérieure 35, destinée à former la face supérieure 25 du matelas de confort 2, et
- une face inférieure 36, formant éventuellement la face inférieure 26 du matelas de confort 2.

Cette couche élastomère 3 est réalisée dans au moins un matériau apte à subir une déformation élastique, dit encore « matériau élastique », choisi parmi :
- les matériaux élastomères, à savoir par exemple le caoutchouc naturel, le caoutchouc « naturel synthétique » (ou poly-isoprène synthétique), le polybutadiène ou le styrène-butadiène, ou
- les matériaux plastiques ou élastomères thermoplastiques (TPE), à savoir par exemple le PVB (polyvinyle de butyral), ABS (acrylonitrile butadiène styrène) / SBR (styrène-butadiène), PP (polypropylène) / EPDM (éthylène-propylène-diène monomère), TPU (TPE de polyuréthane).

Cette couche élastomère 3 est avantageusement réalisée monobloc, soit mono-matériau (dans un seul matériau), soit multi-matériaux (avec au moins deux sous-couches superposées réalisées dans des matériaux différents).

La couche élastomère 3 peut encore contenir des sous-couches de renfort décrites par la suite en relation avec les figures 6 et 10, choisies parmi les fibres textiles, les fibres de métal ou tout autre produit apportant la stabilité et/ou la résistance à l'élongation.

Ces sous-couches de renfort consistent par exemple en une armature textile servant de renfort, réalisée avantageusement en un matériau choisi parmi le nylon, le coton, le polyester, le polyamide ou tout autre textile de renfort.

La couche élastomère 3 comporte, dans son épaisseur et au sein de son matériau constitutif, les cavités étanches 4. La couche élastomère 3, et en particulier son matériau constitutif, définit ainsi directement les cavités étanches 4.

Les cavités étanches 4 sont juxtaposées et sont chacune sous-jacentes d'une partie des zones d'accueil 21 du matelas de confort 2. En d'autres termes, les zones d'accueil 21 du matelas de confort 2 sont sus-jacentes des cavités étanches 4 en présence.

Pour cela, les cavités étanches 4 consistent chacune en une structure tubulaire ayant une forme allongée rectiligne, définissant un axe longitudinal 4'.

Ces cavités étanches 4 sont ici au nombre de six. De manière générale, le nombre de cavités étanches 4 est avantageusement compris entre 5 et 10.

Les cavités étanches 4 sont réparties dans un plan P s'étendant parallèlement aux surfaces 25, 26 du matelas de confort 2.

Ces cavités étanches 4 (en particulier leurs axes longitudinaux respectifs 4') s'étendent ainsi parallèlement, ou au moins approximativement parallèlement, par rapport aux surfaces 25, 26 du matelas de confort 2.

Les cavités étanches 4 s'étendent également chacune sur toute la longueur de la couche élastomère 3, entre ses bords transversaux 34 (et avantageusement sur toute la longueur du matelas de confort 2) ; et les cavités étanches 4 sont réparties sur la largeur de la couche élastomère 3, entre ses bords longitudinaux 32, 33 (et avantageusement sur la largeur du matelas de confort 2).

Ces cavités étanches 4 (en particulier leurs axes longitudinaux 4' respectifs) s'étendent ainsi parallèlement, ou au moins approximativement parallèlement, les unes par rapport aux autres et par rapport aux bords longitudinaux 32, 33 de la couche élastomère 3.

Chaque cavité étanche 4 comporte ainsi une succession de tronçons s'étendant entre les bordures latérales 211 de chaque zone d'accueil 21, perpendiculairement à ces dernières.

Ces cavités étanches 4 sont ici séparées, les unes par rapport aux autres, par une bande intercalaire 38 rectangulaire.

Par ailleurs, chaque cavité étanche 4 est délimitée par deux surfaces en regard, une surface supérieure 41 et une surface inférieure 42, qui se rejoignent au niveau de deux bordures latérales 43 (figures 4 et 9).

Chaque cavité étanche 4 présente ici une section verticale qui, à vide (non représentée), est de forme aplatie ou plane : la distance entre les bordures latérales 43 (largeur) est supérieure à la distance entre ses surfaces supérieure 41 / inférieure 42 en regard (hauteur).

Lorsqu'une cavité étanche 4 est remplie en fluide, sa section verticale est par exemple ronde, ovale ou elliptique, en fonction notamment de la pression du fluide, avec :
- les surfaces supérieure 41 / inférieure 42 qui sont courbes, concaves, et
- un grand axe (passant par ses bordures latérales 43) qui s'étend parallèlement aux faces 25, 26 du matelas de confort 2.

A titre uniquement indicatif, à vide, les cavités étanches 4 ont avantageusement une largeur, entre leurs deux bordures latérales 43 respectives, comprise entre 70 et 100 mm.

Les cavités étanches 4 sont en plus écartées, les unes des autres, d'une distance comprise entre 80 et 130 mm.

Ces cavités étanches 4, remplies en fluide, ont par exemple chacune une hauteur (selon leur petit axe vertical) comprise entre 60 et 100 mm.

Les cavités étanches 4 sont destinées chacune à contenir le fluide caloporteur qui est mis en circulation sur leurs longueurs respectives, pour réguler la température de la face supérieure 25 du matelas de confort 2.

Pour cela, chacune des cavités étanches 4 est terminée par deux orifices débouchants 45 qui sont ménagés chacun au niveau de l'un des bords transversaux 34 de la couche élastomère 3.

Ces orifices débouchants 45 permettent un raccordement fluidique avec le circuit fluidique caloporteur 5.

Les cavités étanches 4 sont ici indépendantes fluidiquement les unes par rapport aux autres. Dans ce cas, le perçage de l'une des cavités étanches 4 ne provoquerait pas la vidange de l'ensemble des cavités étanches de la couche élastomère 3.

Chacune des cavités étanches 4 comporte donc deux orifices débouchants 45 qui lui sont propres, pour la circulation du fluide caloporteur.

Les orifices débouchants 45 s'ouvrent ici directement au niveau des bords transversaux 35 de la couche élastomère 3. De manière alternative, non représentée, les orifices débouchants 45 d'un même côté s'ouvrent dans un conduit ménagé dans la couche élastomère 3, lui-même débouchant au niveau d'un bord de ladite couche élastomère 3.

Les orifices débouchants 45 sont avantageusement obtenus par une découpe à longueur de la couche élastomère 3, selon un trait de coupe orienté perpendiculairement aux bords longitudinaux 32, 33.

En effet, la couche élastomère 3, avant sa pose, est avantageusement stockée sous forme d'un rouleau présentant une longueur de plusieurs mètres, en particulier supérieure à 3 mètres de long.

Cette forme de réalisation en rouleau a l'intérêt de permettre une pose simple et rapide de la couche élastomère 3 dans l'enceinte d'élevage, par le déroulement le long d'une ligne de logettes L puis par une découpe adaptée à la longueur souhaitée de cette ligne.

De plus, l'épaisseur du matériau formant la cavité étanche 4 (en particulier son épaisseur au niveau de sa surface supérieure 43) est avantageusement minimale, par exemple comprise entre 2 et 5 mm, pour favoriser le transfert thermique par phénomène de conduction au travers dudit matériau.

Deux formes de réalisation particulières de ce matelas de confort 2 selon l'invention sont décrites ci-dessous.

### Première forme de réalisation du matelas de confort, ne faisant pas partie de la présente invention,

Une première forme de réalisation du matelas de confort 2, ne faisant pas partie de la présente invention, est illustrée sur les figures 2 à 6.

La structure générale de ce matelas de confort est par exemple du genre du matelas Louisiane commercialisé par la société BIORET AGRI-LOGETTE CONFORT (Nort sur Erdre, France).

Selon ce premier mode de réalisation, le matelas de confort 2 comporte une couche de confort 8 inférieure constituée par une plaque de matériau élastique, par exemple une plaque de granulats de caoutchouc (agglomérés ou non agglomérés, ou de latex) (visible sur les figures 3 et 4).

La couche de confort 8 forme alors la face inférieure 26 du matelas de confort 2.

Cette couche de confort 8 est enveloppée dans la couche élastomère 3 formant un film, qui vient remplacer un film classiquement mis en œuvre (par exemple en matériau élastomère, PVC ou tissu).

Un tel mode de réalisation est intéressant notamment dans une utilisation « rénovation », dans laquelle le film usagé est remplacé tout en apportant une fonction supplémentaire de confort thermique.

Cette couche élastomère 3 comporte ainsi les deux faces suivantes :
- la face supérieure 35 formant la face supérieure 25 du matelas de confort 2, et
- la face inférieure 36, enveloppant la couche de confort 8.

De préférence, l'épaisseur finale de la couche élastomère 3 (une fois ses cavités étanches 4 remplies) est approximativement le double par rapport à l'épaisseur initiale de cette couche élastomère 3 (avant remplissage).

Par exemple, l'épaisseur initiale de la couche élastomère 3 est de l'ordre de 5 à 10 mm.

Les cavités étanches 4 ont une section continue sur leurs longueurs respectives.

Toutefois, les cavités étanches 4 s'étendant respectivement le long des bords longitudinaux 32, 33 de la couche élastomère 3, dites encore « cavités étanches périphériques 47 », comportent chacune une pluralité d'extensions transversales 471.

Les extensions transversales 471 sont réparties sur la longueur de leurs cavités étanches périphériques 47 respectives.

Ces extensions transversales 471 s'étendent chacune perpendiculairement à l'axe longitudinal 4' de la cavité étanche périphérique 47 associée et en direction du bord longitudinal 32, 33 juxtaposé.

A titre indicatif, ces extensions transversales 471 ont chacune une longueur (avant/arrière) comprise entre 300 et 500 mm.

De telles structures permettent d'obtenir une face supérieure 35 dont la température est contrôlée, tout en formant un relief s'étendant dans une direction avant/arrière pour éviter un phénomène de retenue des matières biologiques produites par le bovin (lait, déjections, urines, etc.).

On favorise ainsi l'écoulement de ces matières biologiques en dehors du matelas de confort 2.

Cette couche élastomère 3 est avantageusement solidarisée avec le sol par l'intermédiaire de profilés de type baguettes (non représentés), fixés par des pointes ou des clous, notamment le long des bordures avant 23 et arrière 22 du matelas de confort 2.

Pour cela, la couche élastomère 3 comporte avantageusement deux bandes longitudinales 39, l'une avant et l'autre arrière, qui sont dépourvues de cavités étanches 4 et qui sont destinées à coopérer avec ces baguettes.

Ces bandes longitudinales 39 ont pour cela, par exemple, une largeur comprise entre 100 et 300 mm.

### Seconde forme de réalisation du matelas de confort, selon l'invention

Une seconde forme de réalisation particulière du matelas de confort 2 est illustrée sur les figures 7 à 10.

Selon ce second mode de réalisation, le matelas de confort 2 est constitué directement par la couche élastomère 3 qui comporte :
- les cavités étanches 4 qui sont réparties sur le plan P situé du côté de la face inférieure 26, 36 venant prendre appui sur le sol, et
- plusieurs chambres étanches 9 (ou poches étanches), remplies chacune avec un fluide amortisseur et sus-jacentes de ces cavités étanches 4 (l'une de ces chambres étanches 9 est visible sur la figure 9).

Cette couche élastomère 3 comporte ainsi les faces supérieure 35 et inférieure 36, qui forment respectivement les faces supérieure 25 et inférieure 26 du matelas de confort 2.

Cette couche élastomère 3 est ici formée par une superposition de deux peaux 10 (figure 9) :
- une peau inférieure 101, dans laquelle sont ménagées les cavités étanches 4, et
- une peau supérieure 102, solidarisée de manière monobloc avec la peau inférieure 101 sur leurs pourtours respectifs, pour délimiter les chambres étanches 9.

La régulation thermique entre les cavités étanches 4 et la face supérieure 35 de la couche élastomère 3 s'effectue alors via les chambres étanches 9, par un phénomène de convection thermique assuré par le fluide amortisseur.

De préférence, chaque zone d'accueil 21 comporte alors l'une de ces chambres étanches 9, qui lui est propre.

La couche élastomère 3 comporte ainsi une succession de poches étanches 9 juxtaposées, qui correspondent chacune à l'une des zones d'accueil 21.

Chaque chambre étanche 9 comporte, vue de dessus, un contour rectangulaire correspondant au moins approximativement à la surface d'une logette L.

Le fluide destiné à remplir chaque chambre étanche 9 est avantageusement choisi parmi l'eau, un gaz (l'air notamment), un gel.

Chaque chambre étanche 9 est pour cela associée à un orifice débouchant (non représenté) pour son accès, notamment pour son remplissage et/ou sa vidange, par exemple un orifice équipé d'une valve.

La valve est raccordée de manière étanche avec l'orifice débouchant, par exemple via un sertissage métallique.

Chaque chambre étanche 9 est ainsi individuelle. Et elle est destinée à reprendre sa forme quand l'animal se retire.

La surface supérieure de chaque chambre étanche 9 présente avantageusement une section transversale (selon un plan parallèle aux bords transversaux 24 - figure 9) qui a une forme générale courbe convexe.

Cette forme particulière forme des pentes avant et arrière qui favorisent l'écoulement des matières biologiques en dehors dudit matelas de confort 3.

Deux chambres étanches 9 juxtaposées sont séparées par une bande transversale 11 s'étendant entre les bords longitudinaux 22, 23.

Ces bandes transversales 11 ont deux fonctions :
- elles constituent les lignes pour la coupure à longueur de la couche élastomère 3, de sorte à obtenir les orifices débouchants 45, et
- elles sont destinées à être recouvertes par un élément transversal de fixation 111, par exemple une plinthe, pour permettre une fixation de la couche élastomère 3 tout en assurant le passage du fluide caloporteur.

De préférence, l'épaisseur finale de la peau inférieure 101 (une fois ses cavités étanches 4 remplies) est approximativement le double par rapport à son épaisseur initiale (avant remplissage).

Par exemple, l'épaisseur initiale de la peau inférieure 101 est de l'ordre de 5 à 10 mm.

Toujours de préférence, l'épaisseur finale d'une chambre étanche 9 (ici au niveau de sa flèche) est avantageusement comprise entre 10 et 50 mm.

Encore de préférence, l'épaisseur initiale de la couche élastomère 3 (avant remplissage) est comprise entre 6 et 20 mm.

Les chambres étanches 9 ont par exemple une largeur (parallèlement aux bords longitudinaux 22, 23) de l'ordre de 1 m ; les bandes transversales 11 ont quant à elles avantageusement une largeur de l'ordre de 100 mm.

### Fabrication de la couche élastique

La couche élastomère 3 selon l'invention peut être fabriquée par l'assemblage d'un ensemble de sous-couches superposées, pour former un ensemble de type monobloc.

La technologie d'assemblage peut être choisie par exemple parmi - la vulcanisation, - le collage, - le soudage.

Tel qu'illustré sur la figure 6 pour le premier mode de réalisation, ne faisant pas partie de la présente invention, et sur la figure 10 pour le second mode de réalisation, le procédé pour la fabrication de la couche élastique 3 comprend :
(i) une étape de superposition de sous-couches en matériau élastomère 15 comportant deux surfaces opposées 151, entre lesquelles sont rapportés :
   - des moyens intercalaires 16 aptes à empêcher localement la solidarisation des surfaces 151 en regard desdites couches 15 pour former les cavités étanches 4 et le cas échéant les chambres étanches 9, et
   - éventuellement des couches de renfort 17, puis
(ii) une étape de solidarisation des surfaces 151 en contact desdites sous-couches superposées 15 (c'est-à-dire en dehors de l'encombrement des moyens intercalaires 16), de sorte que les moyens intercalaires 16 forment les cavités étanches 4 et le cas échéant les chambres étanches 9.

Les moyens intercalaires 16 consistent en tout moyen évitant la solidarisation entre les surfaces 151 en regard des couches 15 à assembler.

Dans le cas d'une vulcanisation, les moyens intercalaires 16 consistent par exemple en des bandes ou des tubes qui sont avantageusement réalisés dans un matériau choisi parmi :
- un film anti-feu contenant un retardateur, par exemple en polypropylène, en acrylonitrile butadiène styrène,
- une couche de silicone,
- une couche d'un matériau élastomère vulcanisé, par exemple un tuyau réalisé par exemple en caoutchouc styrène-butadiène (SBR), en caoutchouc naturel (NR), ou en éthylène-propylène-diène monomère.

Ces moyens intercalaires 16 sont en particulier disposés entre deux couches élastomères 15 à assembler l'une avec l'autre.

De manière générale, ces moyens intercalaires 16 sont répartis à façon, en fonction de l'agencement recherché des cavités étanches 4 et le cas échéant des chambres étanches 9.

En l'espèce, comme illustré sur la figure 6 pour le premier mode de réalisation, ne faisant pas partie de la présente invention, l'étape de superposition comprend une superposition de quatre sous-couches en matériau élastomère 15 avec une sous-couche de moyens intercalaires 16 qui est rapportée entre deux desdites sous-couches en matériau élastomère 15.

La sous-couche de moyens intercalaires 16 comporte plusieurs bandes 161 qui sont juxtaposées sur la largeur des deux sous-couches en matériau élastomère 15 pour former les cavités étanches 4 juxtaposées (y compris les cavités étanches périphériques 47).

Comme illustré sur la figure 10 pour le second mode de réalisation, l'étape de superposition comprend une superposition de six sous-couches en matériau élastomère 15 avec deux sous-couches de moyens intercalaires 16 qui sont rapportées chacune entre deux sous-couches en matériau élastomère 15.

En particulier :
- une sous-couche inférieure comporte plusieurs bandes 161 qui sont juxtaposées sur la largeur des sous-couches en matériau élastomère 15 pour former les cavités étanches 4 juxtaposées, et
- une sous-couche supérieure comporte plusieurs rectangles 162 qui sont répartis sur la longueur des sous-couches en matériau élastomère 15, pour former les chambres étanches 9.

De manière générale, le système de confort selon l'invention a l'intérêt de mettre en œuvre des matelas de confort dont la face supérieure est régulée de manière optimale en température, cela de manière à assurer un confort thermique optimal des animaux.

Les matelas de confort ont l'intérêt d'être posés d'une manière classique, avantageusement par déroulement de mur à mur.

La pression surfacique sur l'animal est réduite par rapport à un couchage sur une structure en béton. La circulation sanguine de l'animal est améliorée.

### Fonctionnement

Les moyens échangeurs thermiques 7 sont raccordés avec le circuit fluidique caloporteur 5 et avec le circuit fluidique d'abreuvement 6.

En particulier, l'eau d'abreuvement remplit la chambre 72 des moyens échangeurs thermiques 7, noyant le premier circuit fluidique interne 73.

Ensuite, la circulation de l'eau d'abreuvement et/ou du fluide caloporteur au sein des moyens échangeurs thermiques 7 génère un phénomène de régulation de la température de l'eau d'abreuvement et/ou du fluide caloporteur.

En l'espèce, les moyens de commande 12 peuvent piloter automatiquement le fonctionnement du circuit fluidique caloporteur 5, tenant compte avantageusement de la température ambiante au sein de l'enceinte d'élevage E acquise par les moyens de mesure 13.

En présence de conditions thermiques environnantes défavorables, les moyens de commande 12 génèrent une mise en marche de la pompe 54.

Le fluide caloporteur est alors mis en marche dans le circuit fluidique caloporteur 5, cheminant dans les moyens échangeurs thermiques 7 et dans les cavités étanches 4 du ou des matelas de confort 2.

Au sein des moyens échangeurs thermiques 7, le fluide caloporteur circule le long du premier circuit fluidique interne 73, depuis son orifice supérieur 731 jusqu'à son orifice inférieur 732.

Un échange thermique se produit alors entre, d'une part, l'eau d'abreuvement contenu dans la chambre 72 et, d'autre part, le fluide caloporteur présent dans le premier circuit fluidique interne 73.

Le fluide caloporteur, issu des moyens échangeurs thermiques 7, chemine ensuite en parallèle dans les cavités étanches 4 : le courant de fluide caloporteur se divise afin de traverser simultanément ces cavités étanches 4.

Cette circulation du fluide caloporteur s'effectue également dans un même sens au sein des cavités étanches 4 juxtaposées : le fluide chemine ainsi depuis les orifices débouchants 45 situés au niveau d'un premier bord transversal 34 de la couche élastique 3 (à droite sur la figure 2) jusqu'aux orifices débouchants 45 situés au niveau d'un second bord transversal 34 de la couche élastique 3 (à gauche sur la figure 2).

Parallèlement, la circulation du fluide d'abreuvement est régulée en fonction de la consommation d'eau au niveau des abreuvoirs A par les animaux : l'augmentation de la consommation d'eau d'abreuvement génère un accroissement de la circulation d'eau dans le circuit fluidique d'abreuvement 6.

L'eau d'abreuvement circule depuis l'entrée 61 (amont) jusqu'à la sortie 62 (aval) en passant par les moyens échangeurs thermiques 7.

Dans la chambre 72 des moyens échangeurs thermiques 7, l'eau d'abreuvement chemine depuis le second conduit 742, inférieur, jusqu'au premier conduit 741, supérieur (cette circulation de l'eau d'abreuvement est ainsi à contre-courant par rapport à la circulation du fluide caloporteur).

En mode refroidissement, la température nominale de l'eau d'abreuvement est inférieure à la température du fluide caloporteur pénétrant dans les moyens échangeurs thermiques 7 (le fluide caloporteur s'est réchauffé lors de son passage de le matelas de confort 2).

En effet, l'eau d'abreuvement présente avantageusement une température nominale comprise entre 10°C et 15°C ; la température du fluide caloporteur, pénétrant dans les moyens échangeurs thermiques 7, est supérieure cette dernière.

Le fluide caloporteur est alors refroidi par son passage au travers des moyens échangeurs thermiques 7, voire en plus par les moyens de régulation 57.

Le système de confort 1 selon l'invention permet ainsi d'apporter directement une réduction de la température de l'animal au sein de sa logette L.

Ainsi, en configuration de marche, le système de confort 1 selon l'invention permet de refroidir la face supérieure 25 du matelas de confort 2 qui rafraichit le pelage de la vache et qui limite l'augmentation de sa température corporelle.

Parallèlement, le fluide d'abreuvement est réchauffé par son passage au travers des moyens échangeurs thermiques 7.

Le système de confort 1 selon l'invention permet ainsi de fournir une eau d'abreuvement dont la température est augmentée par rapport à sa température nominale.

Inversement, en mode chauffage, le fluide caloporteur est réchauffé. Le système de confort 1 selon l'invention permet d'apporter directement de la chaleur à l'animal au sein de sa logette L.

L'eau d'abreuvement est là encore réchauffée par son passage au travers des moyens échangeurs thermiques 7.

Là encore, le système de confort 1 selon l'invention permet d'apporter une eau d'abreuvement dont la température est optimale pour les animaux.

Par exemple, l'eau d'abreuvement présente une température nominale comprise entre 10°C et 15°C ; elle est libérée dans l'abreuvoir A à une température comprise entre 17°C et 23°C.

De manière générale, lorsque le risque de stress thermique est écarté, les moyens de commande 12 pilotent automatiquement l'arrêt de la circulation du fluide caloporteur dans le circuit fluidique caloporteur 5.

## Revendications

1. Système pour le confort thermique des animaux dans une enceinte d'élevage, qui comprend :
(a) au moins un matelas de confort (2) qui comprend au moins une couche élastomère (3) et qui comporte deux faces opposées :
- une face supérieure (25), apte à subir une déformation élastique et comportant au moins une zone d'accueil (21) sur laquelle un animal est destiné à prendre appui, et
- une face inférieure (26), destinée à reposer sur une surface de réception,
laquelle au moins une couche élastomère (3) comporte plusieurs cavités étanches (4) destinées à contenir un fluide caloporteur,
lesquelles cavités étanches (4) sont sous-jacentes d'au moins une partie de ladite au moins une zone d'accueil (21) et comportent chacune au moins deux orifices débouchants (45),
(b) un circuit fluidique caloporteur (5), destiné à contenir ledit fluide caloporteur, lequel circuit fluidique caloporteur (5) est raccordé aux orifices débouchants (45) desdites cavités étanches (4) et comporte des moyens (54) pour générer une circulation dudit fluide caloporteur au sein de chacune desdites cavités étanches (4), entre leurs orifices débouchants (45) respectifs,
(c) un circuit fluidique d'abreuvement (6), distinct dudit circuit fluidique caloporteur (5), destiné à contenir de l'eau d'abreuvement et à alimenter au moins un abreuvoir (A), et
(d) des moyens échangeurs thermiques (7) qui sont implantés entre ledit circuit fluidique caloporteur (5) et ledit circuit fluidique d'abreuvement (6), pour assurer des échanges thermiques entre ledit fluide caloporteur et ladite eau d'abreuvement,
laquelle au moins une couche élastomère (3) comporte au moins une chambre étanche (9), destinée à contenir un fluide amortisseur et ménagée entre lesdites cavités étanches (4) et ladite face supérieure (25) dudit matelas (2), laquelle au moins une couche élastomère (3) comporte au moins un orifice débouchant pour l'accès à ladite au moins une chambre étanche (9).

2. Système selon la revendication 1, **caractérisé en ce que** les moyens échangeurs thermiques (7) comprennent un corps creux (71) définissant une chambre (72) contenant deux circuits fluidiques internes distincts :
- un premier circuit fluidique interne (73), comportant une tubulure implantée dans ladite chambre (72) et munie de deux orifices (731, 732) débouchant hors dudit corps creux (71) pour son raccordement à l'un des circuits fluidiques choisi parmi le circuit fluidique caloporteur (5) ou le circuit fluidique d'abreuvement (6), et
- un second circuit fluidique interne (74), formé par ladite chambre (72) qui est munie deux conduits (741, 742) munis chacun d'un orifice (7411, 7421) débouchant hors dudit corps creux (71) pour le raccordement à l'autre des circuits fluidiques choisi parmi le circuit fluidique caloporteur (5) ou le circuit fluidique d'abreuvement (6), et d'un orifice (7412, 7422) débouchant dans ladite chambre (73) pour permettre une circulation fluidique dans ladite chambre (73) entre lesdits conduits (741, 742).

3. Système selon la revendication 2, **caractérisé en ce que** le premier circuit fluidique interne (73) des moyens échangeurs thermiques (7) est raccordé au circuit fluidique caloporteur (5), et **en ce que** le second circuit fluidique interne (74) des moyens échangeurs thermiques (7) est raccordé au circuit fluidique d'abreuvement (6).

4. Système selon l'une quelconque des revendications 1 à 3, **caractérisé en ce que** les cavités étanches (4) dudit au moins un matelas de confort (2) s'étendent parallèlement, ou au moins approximativement parallèlement, les unes par rapport aux autres, et **en ce que** lesdites cavités étanches (4) ont chacune une forme allongée rectiligne.

5. Système selon la revendication 4, **caractérisé en ce que** ladite au moins une couche élastomère (3) comporte deux bords longitudinaux (32, 33),
et **en ce que** lesdites cavités étanches (4) s'étendent parallèlement, ou au moins approximativement parallèlement, auxdits bords longitudinaux (32, 33).

6. Système selon l'une quelconque des revendications 1 à 5, **caractérisé en ce que** chaque zone d'accueil (21) comporte l'une de ces chambres étanches (9), qui lui est propre, ladite couche élastomère (3) comportant ainsi une succession de chambres étanches (9) juxtaposées, qui correspondent chacune à l'une des zones d'accueil (21).

7. Système selon l'une quelconque des revendications 1 à 6, **caractérisé en ce que** le circuit fluidique caloporteur (5) comprend encore des moyens (57) pour réguler la température dudit fluide caloporteur, et
**en ce que** lesdits moyens de régulation de température (57) sont implantés entre lesdits moyens échangeurs thermiques (7) et ledit au moins un matelas de confort (2).

8. Système selon l'une quelconque des revendications 1 à 7, **caractérisé en ce que** ladite au moins une couche élastomère (3) est réalisée monobloc, laquelle couche élastomère (3) définit directement lesdites cavités étanches (4) et ladite au moins une chambre étanche (9).

9. Enceinte d'élevage équipée d'un système pour le confort thermique selon l'une quelconque des revendications 1 à 8.

10. Enceinte d'élevage selon la revendication 9, **caractérisée en ce qu'**elle comprend des logettes (L) et au moins un bac d'abreuvement (A),
**en ce que** ledit au moins un matelas de confort (2) recouvre le sol de l'une au moins desdites logettes (L),
**en ce que** ledit au moins un matelas de confort (2) comporte une pluralité de cavités étanches (4) qui s'étendent au sein de l'une au moins desdites logettes (L), et
**en ce que** le circuit fluidique d'abreuvement (6) est raccordé audit au moins un bac d'abreuvement (A).

11. Procédé pour améliorer le confort thermique des animaux dans une enceinte d'élevage (E) selon l'une quelconque des revendications 9 ou 10,
lequel procédé comprend une opération de régulation de la température de la face supérieure (25) dudit au moins un matelas de confort (2) par :
- une circulation du fluide caloporteur dans lesdites cavités étanches (4) dudit au moins un matelas de confort (2), et
- éventuellement une régulation de la température dudit fluide caloporteur,
lequel procédé comprend également une opération de régulation de la température de l'eau d'abreuvement et/ou du fluide caloporteur, par une circulation de ladite eau d'abreuvement et dudit fluide caloporteur au sein des moyens échangeurs thermiques (7).

## Patentansprüche

1. System für den Wärmekomfort von Tieren in einem Aufzuchtgehege, das
(a) mindestens eine Komfortmatratze (2), die mindestens eine Elastomerschicht (3) aufweist und die zwei entgegengesetzte Seiten aufweist:
- eine Oberseite (25), die geeignet ist, eine elastische Verformung zu ertragen, und die mindestens einen Aufnahmebereich (21) aufweist, auf dem ein Tier liegen soll, und
- eine Unterseite (26), die dazu bestimmt ist, auf einer Aufnahmefläche aufzuliegen,
wobei die mindestens eine Elastomerschicht (3) mehrere dichte Hohlräume (4) aufweist, die dazu bestimmt sind, eine Wärmeträgerflüssigkeit zu enthalten,
wobei die dichten Hohlräume (4) mindestens unter einem Teil des mindestens einen Aufnahmebereichs (21) liegen und jeweils mindestens zwei Durchgangsöffnungen (45) aufweisen,
(b) einen Wärmeträgerflüssigkeitskreis (5), der dazu bestimmt ist, die Wärmeträgerflüssigkeit zu enthalten, wobei der Wärmeträgerflüssigkeitskreis (5) mit den Durchgangsöffnungen (45) der dichten Hohlräume (4) verbunden ist und Mittel (54) zum Erzeugen eines Kreislaufs der Wärmeträgerflüssigkeit in jedem der dichten Hohlräume (4) zwischen dessen jeweiligen Durchgangsöffnungen (45) aufweist,
(c) einen vom Wärmeträgerflüssigkeitskreis (5) getrennten Tränkflüssigkeitskreis (6), der dazu bestimmt ist, Wasser zum Tränken zu enthalten und mindestens eine Tränke (A) zu versorgen, und
(d) Wärmetauschmittel (7), die zwischen dem Wärmeträgerflüssigkeitskreis (5) und dem Tränkflüssigkeitskreis (6) angeordnet sind, um Wärmetauschvorgänge zwischen der besagten Wärmeträgerflüssigkeit und der besagten Tränkflüssigkeit sicherzustellen,
aufweist,
wobei die mindestens eine Elastomerschicht (3) mindestens eine dichte Kammer (9) aufweist, die dazu bestimmt ist, eine Dämpfungsflüssigkeit zu enthalten, und zwischen den dichten Hohlräumen (4) und der Oberseite (25) der Matratze (2) angeordnet ist, wobei die mindestens eine Elastomerschicht (3) mindestens eine Durchgangsöffnung für den Zugang zur mindestens einen dichten Kammer (9) aufweist.

2. System gemäß Anspruch 1, **dadurch gekennzeichnet, daß** die Wärmetauschmittel (7) einen Hohlkörper (71) aufweisen, der eine Kammer (72) definiert, die zwei verschiedene interne Flüssigkeitskreise aufweist:
- einen ersten internen Flüssigkeitskreis (73), der ein in die Kammer (72) eingesetztes Rohr aufweist und mit zwei Löchern (731, 732) versehen ist, die für dessen Anschluß an einen der aus dem Wärmeträgerflüssigkeitskreis (5) und dem Tränkflüssigkeitskreis (6) ausgewählten Flüssigkeitskreise außerhalb des Hohlkörpers (71) münden, und
- einen zweiten internen Flüssigkeitskreis (74), der von der Kammer (72) gebildet ist, die mit zwei Leitungen (741, 742), die außerhalb des Hohlkörpers (71) für den Anschluß an den anderen der aus dem Wärmeträgerflüssigkeitskreis (5) und dem Tränkflüssigkeitskreis (6) ausgewählten Flüssigkeitskreise münden, und einem Loch (7412, 7422) versehen ist, das in die Kammer (73) mündet, um einen Flüssigkeitskreislauf in der Kammer (73) zwischen den Leitungen (741, 742) zu ermöglichen.

3. System gemäß Anspruch 2, **dadurch gekennzeichnet, daß** der erste interne Flüssigkeitskreis (73) der Wärmetauschmittel (7) mit dem Wärmeträgerflüssigkeitskreis (5) und der zweite interne Flüssigkeitskreis (74) der Wärmetauschmittel (7) mit dem Tränkflüssigkeitskreis (6) verbunden ist.

4. System gemäß einem der Ansprüche 1 bis 3, **dadurch gekennzeichnet, daß** sich die dichten Hohlräume (4) der mindestens einen Komfortmatratze (2) parallel oder mindestens näherungsweise parallel zueinander erstrecken und daß die dichten Hohlräume (4) jeweils eine gerade längliche Form haben.

5. System gemäß Anspruch 4, **dadurch gekennzeichnet, daß** die mindestens eine Elastomerschicht (3) zwei Längsränder (32, 33) aufweist.

6. System gemäß einem der Ansprüche 1 bis 5, **dadurch gekennzeichnet, daß** jeder Aufnahmebereich (21) eine dieser dichten Kammern (9), die ihm eigen ist, aufweist, wobei die Elastomerschicht (3) so eine Folge von nebeneinander angeordneten dichten Kammern (9) aufweist, die jeweils einem der Aufnahmebereiche (21) entsprechen.

7. System gemäß einem der Ansprüche 1 bis 6, **dadurch gekennzeichnet, daß** der Wärmeträgerflüssigkeitskreis (5) außerdem Mittel (57) zum Regeln der Temperatur der Wärmeträgerflüssigkeit aufweist und
daß die Mittel (57) zum Regeln der Temperatur zwischen den Wärmetauschmitteln (7) und der mindestens einen Komfortmatratze (2) angeordnet sind.

8. System gemäß einem der Ansprüche 1 bis 7, **dadurch gekennzeichnet, daß** die mindestens eine Elastomerschicht (3) in einem Stück ausgeführt ist, wobei die Elastomerschicht (3) direkt die dichten Hohlräume (4) und die mindestens eine dichte Kammer (9) definiert.

9. Aufzuchtgehege, das mit einem System für den Wärmekomfort gemäß einem der Ansprüche 1 bis 8 ausgestattet ist.

10. Aufzuchtgehege gemäß Anspruch 9, **dadurch gekennzeichnet, daß** es Liegeboxen (L) und mindestens einen Tränkbehälter (A) aufweist,
daß die mindestens eine Komfortmatratze (2) den Boden mindestens einer der Liegeboxen (L) bedeckt,
daß die mindestens eine Komfortmatratze (2) eine Anzahl dichter Hohlräume (4) aufweist, die sich in mindestens einer der Liegeboxen (L) erstrecken und
daß der Tränkflüssigkeitskreis (6) mit dem mindestens einen Tränkbehälter (A) verbunden ist.

11. Verfahren zum Verbessern des Wärmekomforts der Tiere in einem Aufzuchtgehege (E) gemäß einem der Ansprüche 9 oder 10,
wobei das Verfahren einen Vorgang des Regelns der Temperatur der Oberseite (25) der mindestens einen Komfortmatratze (2) durch:
- einen Kreislauf der Wärmeträgerflüssigkeit in den dichten Hohlräumen (4) der mindestens einen Komfortmatratze (2) und
- eventuell ein Regeln der Temperatur der Wärmeträgerflüssigkeit aufweist,
wobei das Verfahren außerdem einen Vorgang des Regelns der Temperatur des Tränkwassers und/oder der Wärmeträgerflüssigkeit durch einen Kreislauf des Tränkwassers und der Wärmeträgerflüssigkeit aufweist.

## Claims

1. System for the thermal comfort of animals in a farm enclosure, which comprises:
(a) at least one comfort mattress (2) that comprises at least one elastomeric layer (3) and that has two opposite faces:
- an upper face (25) able to undergo an elastic deformation and comprising at least one reception area (21) on which an animal is intended to be supported, and
- a lower face (26) intended to rest on a reception surface,
said at least one elastomeric layer (3) comprising several tight cavities (4) intended to contain a heat transfer fluid,
said tight cavities (4) being underneath at least a part of said at least one reception area (21), and each one comprising at least two outlet openings (45),
(b) a heat transfer fluid circuit (5) intended to contain said heat transfer fluid, said heat transfer fluid circuit (5) being connected to the outlet openings (45) of the tight cavities (4) and comprising means (54) for generating circulation of said heat transfer fluid in each one of said tight cavities (4) between the respective outlet openings (45),
(c) a watering fluid circuit (6), different from the heat transfer fluid circuit (5), intended to contain watering water and to deliver it to a drinking trough (A), and
(d) heat transfer means (7) which are located between said heat transfer fluid circuit (5) and said watering fluid circuit (6) for assuring heat transfer between said heat transfer fluid and said watering water,
said at least one elastomeric layer (3) comprising at least one tight chamber (9) intended to contain a damping fluid and located between said tight cavities (4) and said upper face (25) of said mattress (2), said at least one elastomeric layer (3) comprising at least one outlet orifice for access to said at least one tight chamber (9).

2. System according to claim 1, **characterized in that** the heat transfer means (7) comprise a hollow body (71) defining a chamber (72) containing two different internal fluid circuits:
- a first internal fluid circuit (73) comprising a tube implanted in said chamber (72) and provided with two outlet openings (731, 732) outside said hollow body (71) for being connected to one of the fluid circuits selected amongst the heat transfer fluid circuit (5) or the watering fluid circuit (6), and
- a second internal fluid circuit (74) formed by said chamber (72) which is provided with two tubes (741, 742), each one being provided with one outlet (7411, 7421) opening outside said hollow body (71) for being connected to the other one of the fluid circuits selected amongst the heat transfer fluid circuit (5) or the watering fluid circuit (6), and one outlet (7412, 7422) opening inside said chamber (73) for allowing a fluid circulation in said chamber (73) between both tubes (741, 742).

3. System according to claim 2, **characterized in that** the first internal fluid circuit (73) of the heat transfer means (7) is connected to the heat transfer fluid circuit (5) and **in that** the second internal fluid circuit (74) of the heat transfer means (7) is connected to the watering fluid circuit (6).

4. System according to anyone of claims 1 to 3, **characterized in that** the tight cavities (4) of said at least one comfort mattress (2) extend parallel or at least approximately parallel to one another, and **in that** each one of the tight cavities (4) has a straight elongated form.

5. System according to claim 4, **characterized in that** said at least one elastomeric layer (3) has two longitudinal edges (32, 33),
and **in that** said tight cavities (4) extend parallel or at least approximately parallel to the longitudinal edges (32, 33).

6. System according to anyone of claims 1 to 5, **characterized in that** each reception area (21) comprises one of said tight chambers (9) that is its own, said elastomeric layer (3) thus comprising a succession of adjacent tight chambers (9), each one corresponding to one of the reception areas (21).

7. System according to anyone of claims 1 to 6, **characterized in that** the heat transfer fluid circuit (5) further comprises means (57) for regulating the temperature of the heat transfer fluid, and
**in that** said means (57) for regulating the temperature are located between the heat transfer means (7) and said at least one comfort mattress (2).

8. System according to anyone of claims 1 to 7, **characterized in that** .said at least one elastomeric layer (3) is made in one piece, said elastomeric layer (3) defining directly said tight cavities (4) and said at least one tight chamber (9).

9. Farm enclosure provided with a system for thermal comfort according to anyone of claims 1 to 8.

10. Farm enclosure according to claim 9, **characterized in that** it comprises lodgings (L) and at least one watering tray (A),
**in that** said at least one comfort mattress (2) covers the soil of at least one of said lodgings (L),
**in that** said at least one comfort mattress (2) comprises a plurality of tight cavities (4) which extend inside at least one of said lodgings (L), and
**in that** the watering fluid circuit (6) is connected to said at least one watering tray (A).

11. Method of improving the thermal comfort of animals in a farm enclosure (E) according to one of claims 9 or 10,
said method comprising an action of regulating the temperature of the upper face (25) of said at least one comfort mattress (2) by:
- a circulation of the heat transfer fluid in said tight cavities (4) of said at least one comfort mattress (2), and
- possibly a regulation of the temperature of the heat transfer fluid,
said method further comprising an action of regulating the temperature of the watering water and/or the heat transfer fluid by a circulation of said watering water and said heat transfer fluid inside the heat transfer means (7).
